Europäisches Patentamt

European Patent Office

Office européen des brevets

(11) Numéro de publication: **0 014 637**
**B1**

# FASCICULE DE BREVET EUROPEEN

(45) Date de publication du fascicule du brevet: **23.03.83**

(21) Numéro de dépôt: **80400142.8**

(22) Date de dépôt: **29.01.80**

(51) Int. Cl.³: **A 47 J 43/046,
B 02 C 18/18**

(54) **Appareil électroménager à couteau rotatif.**

(30) Priorité: **01.02.79 DE 7902642 U**

(43) Date de publication de la demande:
**20.08.80 Bulletin 80/17**

(45) Mention de la délivrance du brevet:
**23.03.83 Bulletin 83/12**

(84) Etats contractants désignés:
**BE DE GB NL**

(56) Documents cités:
**BE - A - 570 993
DE - B - 1 037 088
DE - C - 1 119 145
DE - U - 1 798 361
FR - A - 1 374 508
US - A - 3 053 518
US - A - 3 074 658**

(73) Titulaire: **SEB S.A. Société Anonyme française
F-21260 Selongey (FR)**

(72) Inventeur: **Berguerand, Claude
F-64360 Cardesse/Monein (FR)**

(74) Mandataire: **Bouju, André et al,
38 Avenue de la Grande Armée
F-75017 Paris (FR)**

Courier Press, Leamington Spa, England.

# Appareil électroménager à couteau rotatif

La présente invention concerne un appareil électroménager à couteau rotatif pour hacher les aliments solides tels que les viandes et pour émulsionner les aliments liquides en particulier pour préparer les oeufs en neige, comportant une ou plusieurs lames coupantes munies d'au moins une protubérance pour émulsionner les aliments liquides, la/les lames étant fixées sur un axe commun de rotation et entraînées par un moteur électrique, le couteau rotatif étant disposé dans un récipient recevant les aliments à préparer.

Un tel appareil est décrit dans le DE—B— 1 037 088.

La lame rotative et tranchante de l'appareil décrit dans ce document porte des protubérances de dimensions relativement importantes fixées perpendiculairement à cette lame et coopérant avec des couteaux fixés au fond du récipient recevant les aliments à préparer. Du fait de la présence de ces protubérances et des ces couteaux, un aliment tel que de la viande plutôt que d'être haché est véritablement broyé. Par ailleurs, du fait de la présence des protubérances précitées et de l'interaction des couteaux, la lame rotative de cet appareil peut difficilement tourner à grande vitesse, de sorte que l'efficacité de cet appareil n'est pas optimale aussi bien dans le cas du hachage d'un aliment tel que la viande que dans le cas de la mise en émulsion d'un liquide tel du blanc d'oeuf.

Le but de la présente invention est de créer un appareil électroménager de construction simple dont la lame rotativ est conformée d'une manière telle que son efficacité est optimale à la fois lors du hachage et lors de la mise en émulsion d'un liquide.

Suivant l'invention, cet appareil est caractérisé en ce que la/les protubérances de la lame sont constituées chacune par une languette découpée sur trois côtés dans l'épaisseur de la lame et pliée par relèvement du bord le plus en arrière par rapport au sens de rotation de ladite lame de manière à former avec celle-ci un angle aigu mesuré de la surface de la lame vers la surface de la languette, ladite languette étant disposée près de l'extrémité libre du couteau et étant éloignée du bord tranchant et du bord de fuite, les dimensions de la languette, faibles par rapport à celles de la lame étant de l'ordre de quelques épaisseurs de la lame.

Ainsi rien ne s'oppose à ce que la lame puisse tourner à grande vitesse. La languette découpée dans la lame présente une position, une orientation et des dimensions faibles, telles que cette languette n'influe pas sur les conditions de hachage tout en créant les turbulences optimales pour la mise en émulsion rapide d'un aliment liquide.

D'autres particularités et avantages de l'invention apparaîtront encore dans la description qui va suivre. Aux dessins annexés, donnés à titre d'exemples non limitatifs:

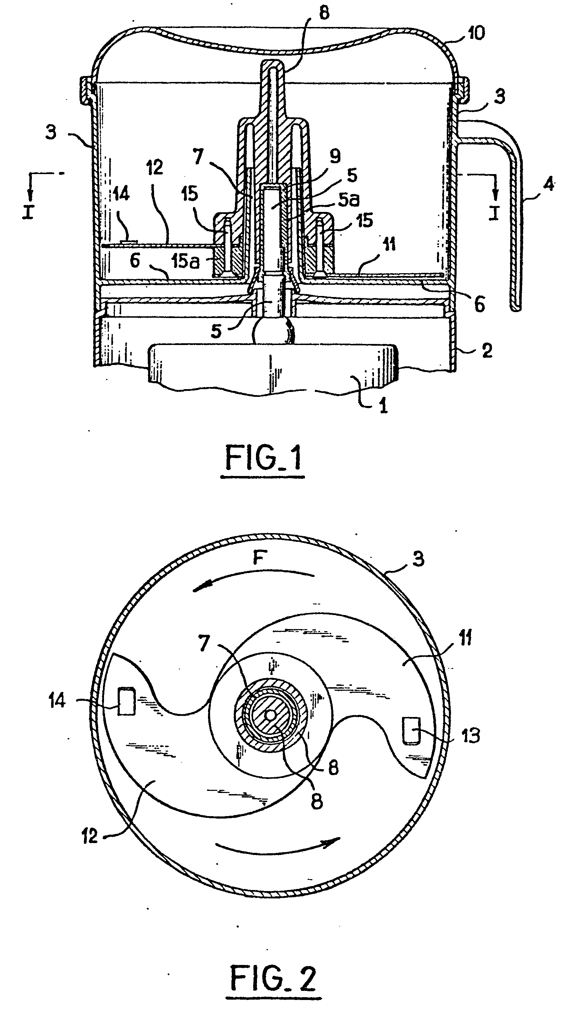

. la figure 1 est une vue en coupe longitudinale de la partie supérieure d'un appareil électroménager selon l'invention avec vue en élévation partielle de son moteur;

. la figure 2 est une vue en coupe transversale selon le plan I—I de l'appareil représenté la figure 1;

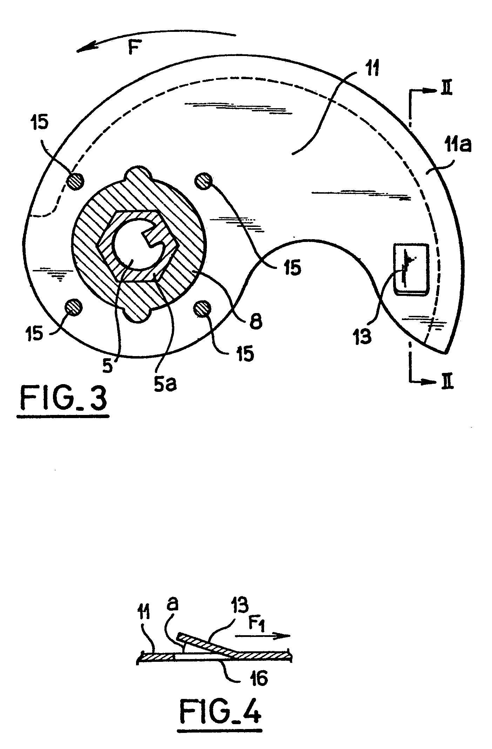

. la figure 3 est une vue en plan à plus grande échelle d'une lame d'un couteau selon un mode de réalisation de l'invention;

. la figure 4 est une vue en coupe selon le plan II—II de la lame représentée à la figure 3.

Dans la réalisation de l'invention, décrite en référence aux figures 1 à 4, on a représenté la partie supérieure d'un appareil électroménager du genre hachoir, comprenant un moteur 1 et son carter 2 (non entièrement figurés), surmonté d'un récipient 3 doté d'une poignée 4 et fermé par un couvercle 10. Le récipient 3 comporte un fond 6 présentant une ouverture circulaire centrale qui se raccorde à un manchon cylindrique 7 ouvert à ses deux extrémités et montant à peu près aux deux tiers de la hauteur du récipient 3. L'axe 5 du moteur, manchonné par une douille 5a à six pans pénètre coaxialement dans le manchon 7. Le porte-couteaux 8 coiffe avec un jeu coaxial le manchon 7 et s'emmanche à frottement doux sur la douille 5a de l'axe 5. L'emboîtement des formes homologues à six pans assure l'entraînement du porte-couteaux 8.

Les lames de couteaux 11 et 12 perpendiculaires à l'axe sont fixées au porte-couteaux 8 par les vis 15, et une entretoise 15a.

Le bord aiguisé 11a de la lame 11 est montré sur la figure 3. Le sens de rotation de cette lame 11 est indiqué par les flèches F sur les figures 2 et 3.

Dans le cas représenté, la lame 11 porte des languettes 13, 14 découpées sur trois côtés dans l'épaisseur de la lame 11, puis pliées vers le sens de rotation de la lame, de façon à former un angle aigu $a$ avec cette dernière. Chaque languette découpée 13, 14 définit dans la lame 11, une ouverture rectangulaire 16, comme le montre la figure 4.

Les dimensions des languettes 13, 14 sont de l'ordre de quelques épaisseurs de la lame 11.

Il est à noter que la discontinuité définie par la languette 13 ou 14 n'empiète pas sur la partie aiguisée 11a de la lame et qu'elle est située à une distance de l'axe quasi-maximale, d'où un grand rayon de giration et une grande vitesse linéaire. On peut aussi remarquer que la grande médiane de l'ouverture rectangulaire 16 est tangente au cercle que décrit son centre, dans le sens indiqué par la flèche $F_1$ de la figure 4. Il apparaît clairement qu'ainsi orientées, les languettes 13, 14 ne gênent pas l'action tranchante du board aiguisé 11a de la lame 11

dans la préparation d'aliments solides. S'il s'agit d'aliments liquides, l'ouverture 16 laissée dans la lame 11 par le relèvement de la languette 13 ou 14 et l'inclinaison de celle-ci suffisent à créer les turbulences qui émulsionnent ces aliments, sans engendrer d'effets divergents sur les liquides.

## Revendication

Appareil électroménager à couteau rotatif pour hacher les aliments solides tels que les viandes et pour émulsionner les aliments liquides en particulier pour préparer les oeufs en neige, comportant une ou plusieurs lames (11, 12) coupantes munies d'au moins une protubérance (13, 14) pour émulsionner les aliments liquides, la/les lames (11, 12) étant fixées sur un axe commun de rotation (5) et entraînées par un moteur (1) électrique, le couteau rotatif étant disposé dans un récipient (3) recevant les aliments à préparer, caractérisé en ce que la/les protubérances (13, 14) sont constituées chacune par une languette (13, 14) découpée sur trois côtés dans l'épaisseur de la lame et pliée par relèvement du bord le plus en arrière par rapport au sens de rotation (F) de ladite lame (11, 12) de manière à former avec celle-ci un angle aigu (a) mesuré de la surface de la lame vers la surface de la languette, ladite languette étant disposée près de l'extrémité libre du couteau et étant éloignée du bord tranchant (11a) et du bord de fuite, les dimensions de la languette, faibles par rapport à celles de la lame étant de l'ordre de quelques épaisseurs de la lame.

## Patentanspruch

Haushaltsgerät mit rotierendem Messer zum Zerhacken von festen Nahrungsmitteln wie Fleisch un zum Emulgieren von flüssigen Nahrungsmitteln, insbesondere zur Zubereitung von Eischnee, mit einer oder mehreren Schneidklingen (11, 12), die mit wenigstens einem Vorsprung (13, 14) zum Emulgieren von flüssigen Nahrungsmitteln versehen sind, wobei die Klinge/Klingen auf einer gemeinsamen Rotationsachse (5) befestigt und von einem Elektromotor (1) angetrieben sind und wovei das rotierende Messer in einem Behälter (3) angeordnet ist, der die zuzubereitenden Nahrungsmittel aufnimmt, dadurch gekennzeichnet, daß der/die Vorsprung/Vorsprünge (13, 14) jeweils durch eine Zunge (13, 14) gebildet sind, die auf drei Seiten aus der Stärke der Klinge ausgeschnitten und abgebogen ist durch Anheben desjenigen Randes, der sich in bezug auf die Drehrichtung (F) der Klinge (11, 12) am weitesten hinten befindet, so daß mit dieser ein spitzer Winkel (a) gebildet wird, der von der Oberfläche der Klinge aus zur Oberfläche der Zunge gemessen ist, wobei diese Zunge in der Nähe des freien Endes des Messers angeordnet und von der Schneidkante (11a) sowie von der Abströmkante entfernt ist, und wobei die Abmessungen der Zunge, die im Vergleich zu denjenigen der Klinge gering sind, die Größenordnung von einigen Dicken der Klinge aufweisen.

## Claim

Electric household appliance comprising a rotary cutter for chopping solid foods such as meat and for emulsifying liquid foods in particular for preparing eggs by beating the whites until stiff, comprising one or a number of cutting blades (11, 12) provided with at least one protuberence (13, 14) for emulsifying liquid foods, the blade(s) (11, 12) being fixed on a common rotating shaft (5) and driven by an electric motor (1), the rotary cutter being mounted within a vessel (3) for receiving the foods to be prepared, characterized in that the protuberance(s) (13, 14) are each constituted by a tongue (13, 14) cut on three sides in the thickness of the blade and bent by lifting the edge which is located farthest to the rear with respect to the direction of rotation (F) of the said blade (11, 12) in such a manner as to form with this latter an acute angle (a) measured from the surface of the blade to the surface of the tongue, the said tongue being placed near the free end of the cutter and being distant from the cutting edge (11a) and from the trailing edge, the dimensions of the tongue which are small with respect to those of the blade being of the order of a few thicknesses of the blade.

## FIG.1

## FIG.2

FIG. 3

FIG. 4